# EUROPEAN PATENT SPECIFICATION

(11) **EP 1 094 941 B1**
(45) Date of publication and mention of the grant of the patent: **31.08.2011**
(21) Application number: 98928919.4
(22) Date of filing: 06.06.1998
(51) Int. Cl.: B32B 27/00

(54) **PAINT REPLACEMENT APPLIQUES**
ANSTRICHSERSETZENDE AUFKLEBER
ELEMENT D'APPLICATION UTILISE A LA PLACE D'UNE PEINTURE

(43) Date of publication of application: 02.05.2001
(73) Proprietor: MINNESOTA MINING AND MANUFACTURING COMPANY, St. Paul, MN 55133-3427 (US)
(72) Inventor: HOYLE, Charles, D., Saint Paul, MN 55133-3427 (US); DIETZ, Timothy, M., Saint Paul, MN 55133-3427 (US); VERKINDEREN, Joseph, H., Saint Paul, MN 55133-3427 (US); FRONEK, Daniel, R., Saint Paul, MN 55133-3427 (US); KIRK, Seth, M., Saint Paul, MN 55133-3427 (US); THOMAS, John, H. III, Saint Paul, MN 55133-3427 (US)
(74) Representative: Vossius & Partner
(86) International application number: PCT/US1998/011742
(87) International publication number: WO 1999/064235

(56) References cited:
- EP-A- 0 266 107
- EP-A- 0 318 230
- EP-A- 0 551 094
- WO-A-96/10491
- WO-A1-99/19414
- DE-A- 1 962 329
- US-A- 3 364 049
- US-A- 3 705 076
- US-A- 5 316 608
- US-A- 5 320 888
- US-A- 5 472 784
- DATABASE WPI Section Ch, Week 8725 Derwent Publications Ltd., London, GB; Class A94, AN 87-175264 XP002092824 & JP 62 108050 A (DAINIPPON INK & CHEM KK) , 19 May 1987
- DATABASE WPI Section Ch, Week 9011 Derwent Publications Ltd., London, GB; Class A18, AN 90-079658 XP002092825 & JP 02 032899 A (ROYAL KOGYO KK) , 2 February 1990
- PROCTOR, P.: "Boeing, 3M Envision Paintless JSF" AVIATION WEEK AND SPACE TECHNOLOGY, 9 June 1997, page 72 XP002092823 NEW YORK.; US cited in the application

## Description

### Background of the Invention

Paint on an aircraft can serve to protect the outer surface as well as to provide decorative features. Paint is applied in a controlled environment to alleviate environmental and health hazards, which results in significantly high costs. Current aircraft paint technology uses large volumes of volatile organic compounds and heavy metals, such as methylene chloride and methyl ethyl ketone, and chromium. Such materials are potentially hazardous to workers and the environment. As a result there is a desire to eliminate the need to paint aircraft.

Over the past 30 years, tapes have been used to protect aircraft substrates as an alternative to paint systems. For example, polyurethane tapes have been used to protect aircraft leading edge substrates from damage from rain, sand, sleet, and other airborne particle damage. Cushioned versions of polyurethane tapes have been used to absorb the impact energy of small rocks and debris and provide protection for antennas, fuselage panels, and composite wing flaps. Thin film tapes capable of being printed with graphics have been used for aircraft markings and decals. Such tapes include polymer backings and adhesives that have significant advantages; however, they are typically limited in their applications because few environments are as demanding as the exterior of an aircraft due to temperature variances, fluid exposures, etc. Thus, a need exists for paint replacement technologies that can withstand the harsh environments to which aircraft are exposed and can be used on the entire surface of an aircraft. Paint replacement appliques have been generally disclosed as including fluoropolymers with a pressure sensitive adhesive and, in Aviation Week & Space Technology, June 9, 1997, as including an extruded fluorinated polymer film having a pressure sensitive acrylic adhesive thereon.

### Summary of the Invention

The present invention provides a specific applique as defined in the claims that includes a backing having at least one treated surface and comprising a fluorinated polymer, and a pressure sensitive adhesive layer on the treated surface of the backing. The pressure sensitive adhesive comprises an acrylate copolymer comprising copolymerized monomers comprising at least one monofunctional alkyl (meth)acrylate monomer and at least one monofunctional free-radically copolymerizable acid-containing reinforcing monomer having a homopolymer glass transition temperature higher than that of the alkyl (meth)acrylate monomer. The applique has a peel strength of at least 25 Newtons/100 millimeter (N/100 mm) at room temperature (20-25°C) after being applied to an aluminum substrate and immersed in a phosphate ester hydraulic fluid for 30 days at room temperature. It also has a peel strength of at least 30 N/100 mm at -51°C.

In another embodiment of the present invention, an applique includes a backing having at least one treated surface and comprising a fluorinated polymer that is not perfluorinated, and a pressure sensitive adhesive layer on the treated surface of the backing. The pressure sensitive adhesive comprises an acrylate copolymer. The applique has a peel strength of at least 25 N/100 mm at room temperature after being applied to an aluminum substrate and immersed in a phosphate ester hydraulic fluid for 30 days at room temperature. It also has a peel strength of at least 30 N/100 mm at -51°C.

In yet another embodiment of the present invention, an applique includes a backing having at least one treated surface and comprising a fluorinated polymer that is not perfluorinated, and a pressure sensitive adhesive layer on the treated surface of the backing. The pressure sensitive adhesive comprises a crosslinked acrylate copolymer. The applique has a peel strength of at least 30 N/100 mm at room temperature after being applied to an aluminum substrate and immersed in a hydrocarbon fluid for 14 days at room temperature.

Another embodiment of the present invention is an applique that includes a backing having at least one treated surface and comprising a fluorinated polymer that is not perfluorinated and a pressure sensitive adhesive layer on the treated surface of the backing. The pressure sensitive adhesive comprises an acrylate copolymer comprising copolymerized monomers comprising at least one monofunctional alkyl (meth)acrylate monomer and at least one monofunctional free-radically copolymerizable acid-containing reinforcing monomer having a homopolymer glass transition temperature higher than that of the alkyl (meth)acrylate monomer. The applique is conformable, has a peel strength of at least 30 N/100 mm at room temperature after being applied to an aluminum substrate and immersed in a hydrocarbon fluid for 14 days at room temperature, a peel strength of at least 25 N/100 mm at room temperature after being applied to an aluminum substrate and immersed in a phosphate ester hydraulic fluid for 30 days at room temperature, and a peel strength of at least 30 N/100 mm at -51°C.

The present invention also provides an airplane comprising an outer surface and an applique thereon, wherein the applique includes a backing having at least one treated surface and comprising a fluorinated polymer, and a pressure sensitive adhesive layer on the treated surface of the backing. The pressure sensitive adhesive comprises an acrylate copolymer comprising copolymerized monomers comprising at least one monofunctional alkyl (meth)acrylate monomer and at least one monofunctional free-radically copolymerizable acid-containing reinforcing monomer having a homopolymer glass transition temperature higher than that of the alkyl (meth)acrylate monomer.

### Detailed Description of Preferred Embodiments

The present invention is directed to appliques, particularly appliques for replacing paint on substrate. Such appliques are useful on vehicles, such as planes, trains, and automobiles. They can be used on painted, primed (e.g., epoxy primer, chromated primer), or bare surfaces. They can be used on metal surfaces, particularly aluminum surfaces, which can be an anodized surface, a chromate-treated surface (which results from treatment with Alodine 1200 of Amchem Products, Inc., Abmoler, PA), or otherwise treated surface. They can be used on surfaces of composite materials, such as carbon fiber reinforced plastics, for example.

The appliques of the present invention can be in a variety of shapes, sizes, and thicknesses. They can be in the form of sheet materials or they can be in the form of three-dimensional shaped articles, such as a thermal-formed boot. Such three-dimensional shaped appliques can be used on the wingtip or nose of an airplane, for example. If in the form of a sheet material, the applique typically has a thickness of about 12-760 micrometers, whereas if in the form of a three-dimensional object, the applique typically has a thickness of about 170-760 micrometers.

The appliques of the present invention can be used as decals and decorative appliques or they can be used as protective appliques to reduce corrosion and abrasion damage, for example. They can be used in multiple layers, such as a protective applique over a decal or a decal over a protective appliques, for example. Significantly, the appliques of the present invention can be used to completely cover the exterior surface of a vehicle, such as an airplane, as a replacement for paint, as a protective coating over paint, or as a coating under paint. They can be applied such that the edges of the appliques overlap or form butt joints.

The appliques of the present invention are stable under a wide variety of environmental conditions, including wide ranges of temperature and humidity, and when exposed to moisture and fluids. That is, the appliques of the present invention are preferably conformable, fluid-resistant, and adhere well to a variety of surfaces under a variety of conditions. As used herein, a "conformable" applique is one that can be applied to various contoured and/or complex surfaces and maintains intimate contact with the entire surface for the time required for the desired application. Preferably, a conformable applique passes the conformability test described in the examples below.

Preferably, appliques of the present invention are also resistant to hydrocarbon fluids (e.g., jet fuel). By this it is meant that an applique of the present invention has a peel strength of at least 30 N/100 mm at room temperature after being applied to an aluminum substrate and immersed in a hydrocarbon fluid for 14 days at room temperature. More preferably, the peel strength is at least 35 N/100 mm, after such exposure.

Preferably, appliques of the present invention are also resistant to phosphate ester hydraulic fluids (e.g., SKYDROL hydraulic fluid). By this it is meant that an applique of the present invention has a peel strength of at least 25 N/100 mm at room temperature after being applied to an aluminum substrate and immersed in a phosphate ester hydraulic fluid for 30 days at room temperature. More preferably, the peel strength is at least 35 N/100 mm, after such exposure.

Preferably, appliques of the present invention exhibit significant peel strength at low temperatures. By this it is meant that an applique of the present invention has a peel strength of at least 30 N/100 mm at -51°C. More preferably, the peel strength is at least 40 N/100 mm, and most preferably, the peel strength is at least 60 N/100 mm at -51°C.

An applique according to the present invention includes a backing having at least one treated surface and a pressure sensitive adhesive layer thereon. The backing includes a fluorinated polymer, preferably, one that is not perfluorinated. The pressure sensitive adhesive includes an acrylate copolymer, preferably, a crosslinked acrylate copolymer. Significantly, and surprisingly, acrylate pressure sensitive adhesive copolymers are advantageous for use in the appliques of the present invention because they show desirable adhesive properties over a broad temperature range, particularly at low temperatures, to a wide variety of substrates.

### Backing

Backings of the appliques of the present invention include one or more fluorinated polymers. Herein, a polymer includes homopolymers and copolymers. Copolymers include polymers containing two or more different monomers, including terpolymers, tetrapolymers, etc. Preferably, the fluorinated polymers are prepared from olefinically unsaturated monomers. Also, preferably, the fluorinated polymers are not perfluorinated. That is, although they may be made from perfluorinated monomers, the resultant polymers have both C-H and C-F bonds, for example.

Preferably, fluorinated polymers suitable for use in making backings for appliques of the present invention are those that form conformable, fluid-resistant sheet materials. As used herein, a "conformable" backing is one that can be applied to various contoured and/or complex surfaces and maintains intimate contact with the entire surface for the time.required for the desired application. Preferably, a conformable backing passes the conformability test described in the examples below. A fluid-resistant backing is one that does not demonstrate a change in weight by more than 10% after being immersed in a hydrocarbon fluid (e.g., jet fuel) or a phosphate ester hydraulic fluid (e.g., SKYDROL hydraulic fluid) for 14 and 30 days, respectively, at room temperature.

One class of useful fluorinated polymers include interpolymerized units derived from vinylidene fluoride (also referred to as "VF₂" or "VDF"). Such materials typically include at least 3 weight percent of interpolymerized units derived from VF₂, which may be homopolymers or copolymers with other ethylenically unsaturated monomers, such as hexafluoropropylene ("HFP"), tetrafluoroethylene ("TFE"), chlorotrifluoroethylene ("CTFE"), 2-chloropentafluoropropene, perfluoroalkyl vinylethers, perfluorodiallylether, or perfluoro-1,3-butadiene. Such fluorine-containing monomers may also be copolymerized with fluorine-free terminally unsaturated olefinic comonomers, such as ethylene or propylene. Preferred such fluoropolymers include tetrafluoroethylene-hexafluoropropylene-vinylidene fluoride terpolymers and hexafluoropropylene-vinylidene fluoride copolymers. Commercially available fluoropolymer materials of this type include, for example, THV 200, THV 400, and THV 500 fluoropolymers, which are available from Dyneon LLC of Oakdale, MN, and SOLEF 11010, which is available from Solvay Polymers Inc., Houston, TX.

Another class of useful fluorinated polymers include interpolymerized units derived from one or more of hexafluoropropylene ("HFP"), tetrafluoroethylene ("TFE"), chlorotrifluoroethylene ("CTFE"), and/or other perhalogenated monomers and further derived from one or more hydrogen-containing and/or non-fluorinated olefinically unsaturated monomers. Useful olefinically unsaturated monomers include alkylene monomers, such as ethylene, propylene, 1-hydropentafluoropropene, 2-hydropentafluoropropene, etc. A preferred such fluoropolymer is a copolymer of poly(tetrafluoroethylene) and ethylene. Commercially available fluoropolymer materials of this type include, for example, TEFZEL LZ300 fluoropolymers, which is available from DuPont Films of Buffalo, NY.

Other useful fluorinated polymers, preferably nonperfluorinated polymers, include poly(vinylfluoride), such as TEDLAR TAW15AH8, which is available from DuPont Films of Buffalo, NY. Blends of fluoropolymers can also be used to make the backings for the appliques of the present invention. For example, blends of two different types of nonperfluorinated fluoropolymers can be used, as well as blends of a nonperfluorinated fluoropolymer with a perfluorinated fluoropolymer. Furthermore, blends of fluoropolymers with nonfluoropolymers, such as polyurethane and polyethylene, for example, can also be used, as long as one of the polymers in the blend is a fluoropolymer, and the nonfluoropolymer is used in a minor amount. Fluoropolymer backings for use in the present invention can be made using a variety of methods, including cast and extrusion methods, preferably, however, they are extruded.

The backings are typically in the form of sheet materials having two major surfaces. Typically, at least one of the surfaces is treated to allow for bonding of a pressure sensitive adhesive, although two opposing surfaces may be treated. The treatment method is corona treatment, particularly corona discharge in an atmosphere containing nitrogen, or nitrogen and hydrogen, as disclosed in

U.S. Pat. No. 5,972,176 (Kirk et al.) (Attorney Docket No. 53573USA8A) entitled "Corona Treatment of Polymers." Another useful treatment method is a chemical etch using sodium naphthalenide. Such treatment methods are disclosed in Polymer Interface and Adhesion, Souheng Wu, Ed., Marcel Dekker, Inc., NY and Basel, pages 279-336 (1982), and Encyclopedia of Polymer Science and Engineering, Second Edition, Supplemental Volume, John Wiley & Sons, pages 674-689 (1989). Treatment conditions are sufficient if there is no failure at the adhesive/backing interface when immersed in a low temperature peel test as described in the examples.

The backings may be clear and colorless. Alternatively, they may include a colorant, such as a pigment or dye. Preferably, the colorant is an inorganic pigment, such as those disclosed in U.S. Pat. No. 5,132,164 (Moriya et al.). The pigment may be incorporated into one or more nonfluorinated polymers, which can be blended with one or more fluorinated polymers.

### Acrylate Copolymer Adhesive

As stated above, acrylate pressure sensitive adhesive copolymers are surprisingly advantageous because they show desirable adhesive properties over a broad temperature range, particularly at low temperatures, to a wide variety of substrates. Such materials possess a four-fold balance of adhesion, cohesion, stretchiness, and elasticity, and a glass transition temperature (T_{g} of less than 20°C. Thus, they are tacky to the touch at room temperature (e.g., 20°C to 25°C), as can be determined by a finger tack test or by conventional measurement devices, and can easily form a useful adhesive bond with the application of light pressure. An acceptable quantitative description of a pressure sensitive adhesive is given by the Dahlquist criterion line (as described in the Handbook of Pressure Sensitive Adhesive Technology, Second Edition, D. Satas, ed., Van Nostrand Reinhold, New York, NY, pages 171-176 (1989)), which typically indicates that materials having a storage modulus (G') of less than 3 x 10⁵ Pascals (measured at 10 radian/second at a temperature of 20°C to 22°C) have pressure sensitive adhesive properties while materials having a G' in excess of this value do not.

The poly(acrylates) are derived from: (A) at least one monofunctional alkyl (meth)acrylate monomer (i.e., alkyl acrylate and alkyl methacrylate monomer); and (B) at least one monofunctional free-radically copolymerizable acid-containing reinforcing monomer. The reinforcing monomer has a homopolymer glass transition temperature (T_{g}) higher than that of the alkyl (meth)acrylate monomer and is one that increases the glass transition temperature and modulus of the resultant copolymer. Herein, "copolymer" refers to polymers containing two or more different monomers, including terpolymers, tetrapolymers, etc.

Preferably, the monomers used in preparing the pressure sensitive adhesive copolymers of the present invention include: component (A)-a monofunctional alkyl (meth)acrylate monomer that, when homopolymerized, generally has a glass transition temperature of no greater than 0°C; and component (B)-a monofunctional free-radically copolymerizable acid-containing reinforcing monomer that, when homopolymerized, generally has a glass transition temperature of at least 10°C. The glass transition temperatures of the homopolymers of monomers A and B are typically accurate to within ±5°C and are measured by differential scanning calorimetry.

Monomer A, which is a monofunctional alkyl acrylate or methacrylate (i.e., (meth)acrylic acid ester), contributes to the flexibility and tack of the copolymer. Preferably, monomer A has a homopolymer T_{g} of no greater than 0°C. Preferably, the alkyl group of the (meth)acrylate has an average of 4 to 20 carbon atoms, and more preferably, an average of 4 to 14 carbon atoms. The alkyl group can optionally contain oxygen atoms in the chain thereby forming ethers or alkoxy ethers, for example. Examples of monomer A include, but are not limited to, 2-methylbutyl acrylate, isooctyl acrylate, lauryl acrylate, 4-methyl-2-pentyl acrylate, isoamyl acrylate, sec-butyl acrylate, n-butyl acrylate, n-hexyl acrylate, 2-ethylhexyl acrylate, n-octyl acrylate, isooctyl acrylate, n-decyl acrylate, isodecyl acrylate, isodecyl methacrylate, and isononyl acrylate. Other examples include, but are not limited to, poly-ethoxylated or -propoxylated methoxy (meth)acrylate (i.e., poly(ethylene/propylene oxide) mono-(meth)acrylate) macromers (i.e., macromolecular monomers), polymethylvinyl ether mono(meth)acrylate macromers, and ethoxylated or propoxylated nonyl-phenol acrylate macromers. The molecular weight of such macromers is typically 100 grams/mole to 600 grams/mole, and preferably, 300 grams/mole to 500 grams/mole. Preferred monofunctional (meth)acrylates that can be used as monomer A include 2-methylbutyl acrylate, isooctyl acrylate, lauryl acrylate, and poly(ethoxylated) methoxy acrylate (i.e., methoxy terminated poly(ethylene glycol) mono-acrylate or poly(ethyleneoxide) mono-methacrylate). Combinations of various monofunctional monomers categorized as an A monomer can be used to make the pressure sensitive copolymer used in making the appliques of the present invention.

Monomer B, which is a monofunctional free-radically copolymerizable acid-containing reinforcing monomer increases the glass transition temperature of the copolymer. As used herein, "reinforcing" monomers are those that increase the modulus of the adhesive, and thereby its strength. Preferably, monomer B has a homopolymer T_{g} of at least 10°C. As used herein, "acid-containing" monomers are those that include acid functionality such as an acrylic acid or a methacrylic acid functionality. Examples of monomer B include, but are not limited to, acrylic acid and methacrylic acid, itaconic acid, crotonic acid, maleic acid, and fumaric acid. A preferred reinforcing monofunctional acrylic monomer that can be used as monomer B includes acrylic acid and methacrylic acid. Combinations of various reinforcing monofunctional monomers categorized as a B monomer can be used to make the copolymer used in making the protective appliques of the present invention.

Optionally, if desired, the copolymer can also include a monofunctional free-radically copolymerizable neutral reinforcing monomer in addition to the acid-containing monomer. Examples of such monomers include, but are not limited to, 2,2-(diethoxy)ethyl acrylate, hydroxyethyl acrylate or methacrylate, 2-hydroxypropyl acrylate or methacrylate, methyl methacrylate, isobutyl acrylate, n-butyl methacrylate, 2-(phenoxy)ethyl acrylate or methacrylate, biphenylyl acrylate, t-butylphenyl acrylate, cyclohexyl acrylate, dimethyladamantyl acrylate, 2-naphthyl acrylate, phenyl acrylate, and N-vinyl pyrrolidone. Combinations of such neutral reinforcing monofunctional monomers can be used to make the copolymer used in making the appliques of the present invention.

The acrylate copolymer is preferably formulated to have a resultant T_{g} of less than 25°C and more preferably, less than 0°C. Such acrylate copolymers preferably include 80 weight percent to 96 weight percent of at least one alkyl (meth)acrylate monomer and 4 weight percent to 20 weight percent of at least one copolymerizable acid-containing reinforcing monomer. More preferably, the acrylate copolymers 85 weight percent to 95 weight percent of at least one alkyl (meth)acrylate monomer and 6 weight percent to 15 weight percent of at least one copolymerizable acid-containing reinforcing monomer. These weight percentages are based on the total weight of the monomers.

One or more nonionic crosslinking agents that may, or may not, be copolymerizable with monomers A and B, can be used in the pressure sensitive adhesives of the appliques of the present invention if desired. A crosslinking agent is referred to herein as component C. Typically, component C modifies the adhesion of the pressure sensitive adhesive and improves its cohesive strength. The crosslinking agent typically produces chemical crosslinks (e.g., covalent bonds). Prior to application of the applique to a substrate, the crosslinking functionality is consumed, i.e., it is essentially completely reacted with monomers A and B or copolymers thereof.

When component C contains ethylenic unsaturation, it is incorporated into the backbone of the copolymer by copolymerization with monomers A and B through the ethylenic unsaturation. Such crosslinking agents are disclosed in U.S. Pat. Nos. 4,379,201 (Heilmann et al.), 4,737,559 (Kellen et al.), 5,073,611 (Rehmer et al.), and 5,506,279 (Babu et al.). Alternatively, component C can be essentially independent of the polymeric backbone. Materials of this type can cause crosslinking by, for example, reaction with the pendant carboxylic acid group of monomer B as disclosed in U.S. Pat. No. 5,604,034 (Matsuda), or by photoactivated hydrogen abstraction as disclosed in U.S. Pat. Nos. 4,330,590 (Vesley) and 4,329,384 (Vesley). Matsuda discloses the use of multifunctional crosslinking agents whose functionalities are reactive with carboxylic acid groups, while Vesley describes additives that can cause crosslinking upon exposure to ultraviolet radiation (e.g., radiation having a wavelength of about 250 nanometers to about 400 nanometers).

Preferably, component C is (1) a copolymerizable olefinically unsaturated compound, which, in the excited state, is capable of abstracting hydrogen, (2) a compound having at least two reactive functional groups reactive with carboxylic acid groups, or (3) a noncopolymerizable compound which, in the excited state, is capable of abstracting hydrogen. Component C1 is a free-radically polymerizable monomer capable of polymerizing with monomers A and/or B. Components C2 and C3 are essentially free of olefinic unsaturation and thus typically not copolymerizable with monomers A and/or B. Combinations of various crosslinking agents can be used to make the pressure sensitive adhesive of the present invention.

One type of nonionic crosslinking agent (i.e., component C1) is an olefinically unsaturated compound that is copolymerized with monomers A and B and generates free radicals on the polymer upon irradiation of the polymer. Examples of such a compound include an acrylated benzophenone as described in U.S. Pat. No. 4,737,559 (Kellen et al.), p-acryloxy-benzophenone, which is available from Sartomer Company, Exton, PA, and monomers described in U.S. Pat. No. 5,073,611 (Rehmer et al.) including p-N-(methacryloyl-4-oxapentamethylene)-carbamoyloxybenzophenone, N-(benzoyl-p-phenylene)-N'-(methacryloxymethylene)-carbodiimide, and p-acryloxy-benzophenone. U. S. Pat. No. 5,506,279 (Babu et al.) at columns 5-6 describes another suitable olefinically unsaturated crosslinking agent referred to therein as Formula 2, which is {2-[4-(2-hydroxy-2-methyl-propan-1-one)phenoxy]}ethyl (2-methyl-2-(2-methyl-2-propen-1-one)amino)propanoate. The olefinically unsaturated compound which, in the excited state, is capable of abstracting hydrogen preferably includes acrylic functionality. Combinations of such crosslinking agents can be used to make the pressure sensitive adhesive used in the present invention.

A second type of nonionic crosslinking agent (i.e., component C2) is a crosslinking compound which is essentially free of olefinic unsaturation and is capable of reacting with the carboxylic acid groups of monomer B. It includes at least two functional groups reactive with carboxylic acid groups. It may be added to a mixture of monomers A and B prior to their polymerization, or after they have been formed into a partially polymerized syrup, or to a copolymer of monomers A and B. Examples of such components include, but are not limited to, 1,4-bis(ethyleneiminocarbonylamino)benzene; 4,4-bis(ethyleneiminocarbonylamino)diphenylmethane; 1,8-bis(ethyleneiminocarbonylamino)octane; 1,4-tolylene diisocyanate; and 1,6-hexamethylene diisocyanate as described in U.S. Pat. No. 5,604,034 (Matsuda). Another example is N,N'-bis-1,2-propyleneisophthalamide as described in U.S. Pat. No. 4,418,120 (Kealy et al.). Other such crosslinking agents are available from K.J. Quin and Co., Seabrook, NH, and EIT Inc., Lake Wyllie, SC. Other examples of C2 crosslinking agents include diepoxides, dianhydrides, bis(amides), and bis(imides). Combinations of such crosslinking agents can be used to make the pressure sensitive adhesive used in the present invention.

A third type of nonionic crosslinking agent (i.e., component C3) is a compound which is essentially free of olefinic unsaturation, is noncopolymerizable with monomers A and B, and, in the excited state, is capable of abstracting hydrogen. It is added to a copolymer of monomers A and B, or a partially polymerized syrup of monomers A and B. Upon irradiation of the mixture, component C3 generates free radicals on the polymer or partially polymerized material. Examples of such components include, but are not limited to, 2,4-bis(trichloromethyl)-6-(4-methoxy)phenyl)-s-triazine; 2,4-bis(trichloromethyl)-6-(3,4-dimethoxy)phenyl)-s-triazine; 2,4-bis(trichloromethyl)-6-(3,4,5-trimethoxy)phenyl)-s-triazine; 2,4-bis(trichloromethyl)-6-(2,4-dimethoxy)phenyl)-s-triazine; 2,4-bis(trichloromethyl)-6-(3-methoxy)phenyl)-s-triazine as described in U.S. Pat. No. 4,330,590 (Vesley), and 2,4-bis(trichloromethyl)-6-naphthenyl-s-triazine and 2,4-bis(trichloromethyl)-6-(4-methoxy)naphthenyl-s-triazine as described in U.S. Pat. No. 4,329,384 (Vesley). Combinations of such crosslinking agents can be used to make the pressure sensitive adhesive used in the present invention.

Another type of crosslinking agent that can be used in addition to one or more of components C1-C3, is an acrylic crosslinking monomer (component C4) containing at least two acrylic moieties, which preferably has an average of less than about 12 atoms in the chain between acrylic groups. Examples of this type of crosslinking agent include, but are not limited to, trimethylolpropane triacrylate, 1,6-hexanediol diacrylate, pentaerythritol tetraacrylate, 1,2-ethylene glycol diacrylate, dodecyl diacrylate, and the diacrylate of ethylene oxide modified bisphenol A.

If used, the crosslinking agent is used in an effective amount, by which is meant an amount that is sufficient to cause crosslinking of the pressure sensitive adhesive to provide adequate cohesive strength to produce the desired final adhesion properties to the substrate of interest. Preferably, if used, the crosslinking agent is used in an amount of 0.01 part to 2 parts, based on 100 parts of the total monomer content.

If a photocrosslinking agent has been used, the adhesive can be immersed in ultraviolet radiation having a wavelength of about 250 nm to about 400 nm. The radiant energy in this preferred range of wavelength required to crosslink the adhesive is 100 millijoules/centimeter² (mJ/cm²) to 1,500 mJ/cm², and more preferably, 200 mJ/cm² to 800 mJ/cm².

### Preparation of Acrylate Copolymers

The acrylate pressure sensitive adhesives of the present invention can be synthesized by a variety of free-radical polymerization processes, including solution, radiation, bulk, dispersion, emulsion, and suspension polymerization processes. Polymerization of the monomers to form the copolymer useful in the pressure sensitive adhesive composition of the present invention is typically carried out using thermal energy, electron-beam radiation, ultraviolet radiation, and the like. Such polymerizations can be facilitated by a polymerization initiator, which can be a thermal initiator or a photoinitiator. Examples of suitable photoinitiators include, but are not limited to, benzoin ethers such as benzoin methyl ether and benzoin isopropyl ether, substituted benzoin ethers such as anisoin methyl ether, substituted acetophenones such as 2,2-dimethoxy-2-phenylacetophenone, and substituted alpha-ketols such as 2-methyl-2-hydroxypropiophenone. Examples of commercially available photoinitiators include IRGACURE 651 and DAROCUR 1173, both from Ciba-Geigy Corp., Hawthorne, NY, and LUCERIN TPO from BASF, Parsippany, NJ. Examples of suitable thermal initiators include, but are not limited to, peroxides such as dibenzoyl peroxide, dilauryl peroxide, methyl ethyl ketone peroxide, cumene hydroperoxide, dicyclohexyl peroxydicarbonate, as well as 2,2-azo-bis(isobutryonitrile), and t-butyl perbenzoate. Examples of commercially available thermal initiators include VAZO 64 from ACROS Organics, Pittsburg, PA, and LUCIDOL 70 from Elf Atochem North America, Philadelphia, PA. The polymerization initiator is used in an amount effective to facilitate polymerization of the monomers. Preferably, the polymerization initiator is used in an amount of 0.1 part to 5.0 parts, and more preferably, 0.2 part to 1.0 part by weight, based on 100 parts of the total monomer content.

If a photocrosslinking agent is used, the coated adhesive can be immersed in ultraviolet radiation having a wavelength of about 250 nm to about 400 nm. The radiant energy in this preferred range of wavelength required to crosslink the adhesive is 100 millijoules/cm² to 1,500 millijoules/cm², and more preferably, 200 millijoules/cm² to 800 millijoules/cm².

The copolymers of the present invention can be prepared by a variety of techniques, which may or may not include solvent or chain transfer agents (e.g., CBr₄) to control molecular weight. These techniques may involve the use of appropriate polymerization initiators. A preferred solvent-free polymerization method using monomers A, B, and a crosslinking agent is disclosed in U.S. Pat. No. 4,379,201 (Heilmann et al.). Initially, a mixture of monomers A and B is polymerized with a portion of a photoinitiator by exposing the mixture to UV radiation in an inert environment for a time sufficient to form a coatable base syrup, and subsequently adding a crosslinking agent and the remainder of the photoinitiator. This final syrup containing a crosslinking agent (e.g., having a Brookfield viscosity of 100 centipoise to 6000 centipoise at 23°C, as measured with a No. 4 LTV spindle, at 60 revolutions per minute) is then coated onto a substrate, such as a backing. Once the syrup is coated onto a backing, further polymerization and crosslinking is typically carried out in an inert environment (i.e., an environment that is nonreactive with the monomer mixture). Suitable inert environments include nitrogen, carbon dioxide, helium, and argon, which exclude oxygen. A sufficiently inert atmosphere can be achieved by covering a layer of the photoactive syrup with a polymeric film, such as silicone-treated polyethylene terephthalate (PET) film, that is transparent to UV radiation or e-beam and irradiating through the film in air.

A preferred solution polymerization method for preparing a copolymer using monomers A, B, and optionally a crosslinking agent is disclosed in (U.S. Pat. No. 5,073,611 Rehmer et al.). Suitable solvents for such preparation methods include, for example, hydrocarbons such as benzene, toluene, xylene, normal hexanes, cyclohexane, as well as esters, alcohols, ethers, and mixtures thereof For carrying out the polymerization in solution, some or all of the solvent is heated with some of the monomer mixture and some or all of the thermal initiator. When the polymerization begins, the remainder of the monomer mixture, and where relevant, the remainder of the thermal initiator and the solvent are added. After polymerization, the composition can be coated onto a backing and the solvent can be removed by evaporation with or without heat.

A latex polymerization method for preparing a copolymer using monomers A, B, and a crosslinking agent is disclosed in U.S. Pat. No. 5,424,122 (Crandall et al.). For example, a latex emulsion polymerization is carried out by combining monomers A, B, and a crosslinking agent, an oleophilic nonionic free radical initiator, water, and a nonionic surfactant. The mixture is homogenized to form an emulsion followed by initiation of free radical polymerization, typically done using heat, while agitating the emulsion under an inert atmosphere. After polymerization the latex can be coated onto a solid substrate and dried, typically at a temperature of at least about 65°C. If necessary, water can be added or removed to reach an appropriate coating viscosity.

A pressure sensitive adhesive composition may then be applied to the backing by a variety of coating methods including knife coating, slotted knife coating, or reverse roll coating. If the composition includes a solvent, it is then dried at a temperature (e.g., about 65°C to about 120°C) and a time (e.g., several minutes to about one hour) so as to provide an adhesive applique. The thickness of the layer of adhesive may vary over a broad range of about 10 micrometers to several hundred micrometers (e.g., about 200 micrometers).

Once the adhesive composition has been substantially fully cured and optionally crosslinked so as to provide an applique, the adhesive surface of the applique may, optionally, be protected with a temporary, removable release liner (i.e., protective liner) such as a polyolefin (e.g., polyethylene or polypropylene) or polyester (e.g., polyethylene terephthalate) film, or a plastic film. Such films may be treated with a release material such as silicones, waxes, or fluorocarbons. Only after the adhesive composition has been substantially fully cured and optionally crosslinked such that there is substantially no unsaturation are the adhesive appliques of the present invention applied to a substrate.

### Optional Adhesive Additives

The acrylate pressure sensitive adhesive compositions used in the appliques of the present invention can include conventional additives such as tackifiers, plasticizers, flow modifiers, neutralizing agents, stabilizers, antioxidants, fillers, or colorants, as long as they do not interfere with the fluid resistance of the adhesive. Initiators that are not copolymerizable with the monomers used to prepare the acrylate copolymer can also be used to enhance the rate of polymerization and/or crosslinking. Such additives can be used in various combinations. If used, they are incorporated in amounts that do not materially adversely affect the desired properties of the pressure sensitive adhesives or their fiber-forming properties. Typically, these additives can be incorporated into these systems in amounts of 0.05 weight percent to 25 weight percent, based on the total weight of the acrylate based pressure sensitive adhesive composition.

### Preparation of Appliques

Appliques of the present invention can be prepared using standard film-forming and adhesive-coating techniques. Typically, a fluoropolymer is extruded onto a carrier, such as polyethylene terephthalate film, which can be smooth or rough for glossy or matte finish backings, to form a backing. The backing is then allowed to cool and solidify. The exposed surface of the backing is then treated to enhance adhesion of a pressure sensitive adhesive layer. A layer of pressure sensitive adhesive is then applied to the treated surface of the backing. A wide variety of coating techniques can be used, such as knife coating, roll coating, etc. The adhesive can also be applied using solvent cast techniques, for example. Alternatively, a layer of adhesive could be laminated to the backing. Thus, the adhesive can be prepolymerized and then applied to the backing or applied as a prepolymer and cured while on the backing, for example. A release liner can be applied over the adhesive layer as described above. In some processes, it may be desirable to cure the adhesive through the release liner. If desired, the carrier for the backing can be removed, the exposed surface of the backing treated as described above for enhanced adhesion to a pressure sensitive adhesive, as would be desired for applications in which an applique of the present invention is applied on top of another applique of the present invention.

### EXAMPLES

The following examples are provided to illustrate presently contemplated preferred embodiments, but are not intended to be limiting thereof. All percentages and parts are by weight unless otherwise noted.

### Applique Test Coupon Preparation

Test coupons were prepared in the following manner. A 7.6 cm x 11.4 cm x 0.063 cm aluminum coupon (2024-T3, available from Q-Panel Lab Products, Cleveland, OH) was washed three times with isopropyl alcohol prior to use. A piece of 3M Scotch Brand 898 High Performance Tape (available from 3M Company, St. Paul, MN), measuring 2.54 cm x 11.4 cm, was wrapped around one longitudinal edge of the coupon such that each opposing surface of the coupon was covered with about 1.2 cm of the tape. Three 2.54 cm x 15.2 cm test strips of an applique were then provided and the release liner was removed from them. The test strips were applied across the width (7.6 cm) of the washed aluminum coupon using two passes of a 2 kg hard rubber roller; this left 7.6 cm of each test strip hanging over the taped longitudinal edge. This resulted in an 8.8 cm tab portion, which encompassed the 1.2 cm width of the taped longitudinal edge and the 7.6 cm section of the test strip overhanging the edge of the coupon, for each test strip. 3M Scotch Brand 898 High Performance Tape having dimensions equal to that of the tab was adhered to the back of each tab to prevent stretching of the tab during testing. In some examples, the test strip was reinforced along the entire length of the test strip; this is noted in the tables showing those examples. The coupons having test strips on them were evaluated for fluid resistance. They were also evaluated for peel adhesion strength at room and cold temperatures and, in some cases, after exposure to hydrocarbon and hydraulic fluids.

### Test Methods

### Hydrocarbon Fluid Resistance

### Method A

Method A was used to evaluate the resistance of backings, used to prepare the appliques of the invention, to hydrocarbon fluid. After removal of the carrier web from the backing, three 2.85 cm² samples of each film were provided, weighed to obtain an average initial value, and then totally immersed in a hydrocarbon fluid, PHILJET A Aviation Fuel with PFA 55-MB (available from Phillips 66 Company, Bartlesville, OK). After 14 days the samples were removed, the excess fluid was wiped off of the surface and each sample was re-weighed. Films having an average weight within +/- 10% of the initial average weight after immersion were graded as "Pass"; films having an average weight more than +/- 10% of the initial average weight after immersion were graded as "Fail".

### Method B

Method B was used to evaluate the resistance of appliques of the invention, prepared as described in the following Examples, to hydrocarbon fluid. Test coupons were prepared as described in "Applique Test Coupon Preparation" above, stored at room temperature for 72 hours, then immersed in a container of PHILJET A Aviation Fuel with PFA 55-MB which was then sealed. The release liner was left on the tab portion of the test strips. The exposed edges of the applique test strips were not sealed prior to immersion. Each coupon was removed after 14 days immersion at room temperature and, after the excess fluid was wiped off, tested using tweezers to determine if the edges of the test strip remained adhered to the substrate. Test strips were examined visually and those estimated to exhibit less than 5% edge lift along the entire edge were graded as "Pass". Test strips which completely delaminated from the coupon, or exhibited signs of swelling, curling or fell off the aluminum panel during immersion, or which were estimated to exhibit greater than 5% edge lift were all graded as "Fail".

Some of the test coupons were tested for peel adhesion strength after 14 days immersion in hydrocarbon fluid. Upon removal from the fluid, the outer surface of the entire test coupon was wiped off to remove any excess fluid. Within 1 hour of removal, each test coupon was tested according to "Peel Adhesion Strength" (Method A) described below.

### Hydraulic Fluid Resistance

### Method A

Method A was used to evaluate the resistance of backings, used to prepare the appliques of the invention, to flame retardant hydraulic fluid. Testing was done as described in "Hydrocarbon Fluid Resistance - Method A" with the following modifications. A flame retardant, phosphate ester hydraulic fluid, 57 SKYDROL 500B-4 GL (available from Aviall, Eagan, MN), was used in place of of PHILJET A Aviation Fuel with PFA 55-MB, and the immersion time was 30 days. Films having an average weight within +/- 10% of the initial average weight after immersion were graded as "Pass"; films having an average weight more than +/-10% of the initial average weight after immersion were graded as "Fail".

### Method B

Method B was used to evaluate the resistance of the appliques of the invention to flame retardant hydraulic fluid. Test coupons were prepared as described in "Applique Test Coupon Preparation" above and tested as described above in "Hydrocarbon Fluid Resistance - Method B" with the following modifications. A flame retardant, phosphate ester hydraulic fluid, 57 SKYDROL 500B-4 GL, was used in place of PHILJET A Aviation Fuel with PFA 55-B, and the immersion time was 30 days. Each coupon was then and, after the excess fluid was wiped off, tested using tweezers to determine if the edges of the test strip remained adhered to the substrate. Test strips were examined visually and those estimated to exhibit less than 5% edge lift along the entire edge were graded as "Pass". Test strips which completely delaminated from the coupon, or exhibited signs of swelling, curling or fell off the aluminum panel during immersion, or which were estimated to exhibit greater than 5% edge lift were all graded as "Fail". Some of the test coupons were tested for peel adhesion strength after 30 days immersion in hydraulic fluid. Upon removal from the fluid, the outer surface of the entire test coupon was wiped off to remove any excess fluid. Within 1 hour of removal, each test coupon was tested according to "Peel Adhesion Strength" (Method A) described below.

### Conformability

### Method A

Method A was used to evaluate the conformability of backings employed in the preparation of appliques of the invention. Two 7.62 cm x 25.4 cm bare aluminum panels having a thickness of 1 mm were placed one over the other to provide a 5.08 cm x 25.4 cm overlap. The panels were riveted together using one row of MS20470 AN470-6-6 Universal Head rivets (as described on page 64, Standard Aircraft Handbook, 5th Edition) down the center and along the length of the overlap section. The rivets were spaced 2.54 cm apart from each other and the resultant test panel typically had 9 rivets. To a 10.0 cm x 30.5 cm sample of backing on a carrier web was laminated 3M Brand No. 966 Laminating Tape (available from 3M Company, St. Paul, MN). The laminating tape was applied to the surface of the backing opposite that in contact with the carrier using a small rubber roller and hand pressure. The carrier web was removed and three 5.08 cm x 7.62 cm test strips were cut from the backing / laminating tape combination. The release liner was then removed from the adhesive of the laminating tape and the test strips applied by hand lengthwise to the riveted aluminum panels such that the test strips each covered 2 rivets. The strips were rubbed down to ensure intimate contact with the panel and rivets using finger pressure and /or a flat piece of flexible plastic. After 48 hours at room temperature, each test strip was visually evaluated for conformability. Those examples estimated as having less than 5% lift-off around the total circumference at the base of the rivet were graded as "Pass".

### Method B

Method B was used to evaluate the conformability of appliques of the invention prepared as described in the following Examples. After removal of the release liner from the adhesive, evaluation of conformability was carried out as described for Method A with the following modification. Test strips of appliques were employed in place of test strips of backing having laminating tape adhered thereon.

### Peel Adhesion Strength

### Method A

Coupons having applique test strips thereon were evaluated for peel adhesion strength at room temperature (24° C). Specifically, coupons prepared as described in "Applique Test Coupon Preparation" above were tested according to PSTC-1 (11/75) and further described in U.S. Pat. No. 5,670,557 (Dietz et al). After a 72 hour dwell at room temperature (approximately 24° C), the tab end of each strip was lifted to expose the taped longitudinal edge of the coupon. The taped longitudinal edge of the coupon was then clamped in the jaws of a tensile testing machine (Instron Universal Testing Instrument Model #4201 equipped with a 1 kN Static Load Cell, available from Instron Company Corporation, Canton, MA). The tab of the test strip was attached to the load cell and peeled at an angle of 180° and at a rate of 30.5 cm/minute. The peel adhesion force required to remove the test strip from the aluminum coupon was recorded in ounces and the average value between 5.1 and 7.6 cm was taken. Three test strips were evaluated, and the results combined to give an average value in ounces/inch which was converted and normalized to Newtons/100 mm.

### Method B

Test coupons having applique test strips thereon were prepared and evaluated as described in Method A above with the following modifications. The tensile testing machine was equipped with an Instron Environmental Chamber System, Model #3116. Each test coupon was cooled down to -51 °C and equilibrated at that temperature for 10 minutes. After equilibration the peel adhesion force was measured and the peel adhesion strength determined as described in Method A. For those samples which broke during testing a designation of "b" was assigned. The average peel adhesion strength of test specimens which broke was above 35 N/100 mm at the breakpoint.

### Glossary

- AA: acrylic acid
- 3,4-DMT: 2,4-bis(trichloromethyl)-6-(3,4-dimethoxy)phenyl-s- triazine, a photoactivated crosslinker (described in U.S. Pat. No. 4,330,590 (Vesley))
- DYNEON THV 200: a fluorothermoplastic terpolymer of tetrafluoroethylene, hexafluoropropylene, and vinylidene fluoride available from Dyneon LLC, Oakdale, MN
- DYNEON THV 400: a fluorothermoplastic terpolymer of tetrafluoroethylene, hexafluoropropylene, and vinylidene fluoride available from Dyneon LLC, Oakdale, MN
- DYNEON THV 500: a fluorothermoplastic terpolymer of tetrafluoroethylene, hexafluoropropylene, and vinylidene fluoride available from Dyneon LLC, Oakdale, MN
- FLUOROETCH: a fluoropolymer prebonding etchant, believed to be sodium / naphthalene based, provided by Acton Technologies, Inc., Pittston, PA
- HDDA: 1,6-hexanediol diacrylate crosslinker
- IOA: isooctyl acrylate
- IRGACURE 651: 2,2-dimethyl-2-phenyl-acetophenone, a photoinitiator available from Ciba-Geigy Specialty Chemicals, Corporation, Tarrytown, NY
- 4-MT: 2,4-bis(trichloromethyl)-6-(4-methoxy)phenyl-s- triazine (describe in U.S. Pat. No. 4,330,590)
- PP: poly(propylene)
- PTFE: poly(tetrafluoroethylene)
- PERSPEX CP-41: an unmodified poly(methyl methacrylate), available from ICI Acrylics, Inc., St. Louis, MO
- SOLEF 1008: a film of poly(vinylidene fluoride), availabe from Solvay Polymers Inc., Houston, TX
- SOLEF 11010: a copolymer film of vinylidene fluoride and hexafluoropropylene, available from Solvay Polymers Inc., Houston, TX
- TEDLAR TAW15AH8: a poly(vinyl fluoride) film, available from DuPont Films, Buffalo, NY
- TEFZEL LZ300: a copolymer film of poly(tetrafluoroethylene) and ethylene, available from DuPont Films, Buffalo, NY
- UHMW PE: ultra high molecular weight poly(ethylene) film
- VAZO 64: a thermal initiator, available from ACROS Organics, Pittsburg, PA

The invention will be more fully appreciated with reference to the following non-limiting examples. All dimensions given in the test methods and the examples are nominal dimensions.

### Example 1

A clear fluoropolymer film was prepared by extruding DYNEON THV 500 to a thickness of 88.9 µm +/- 12 µm onto a 51 µm polyethylene terephthalate carrier web using a Haake extruder having a screw diameter of 1.9 cm and a die width of 20.3 cm, and employing a screw speed of 165 rpm and a web speed of 1.5 meters/minute. The extruder die was held approximately 1.9 cm away from the carrier. The extruder had three zones which were set at 204 °C in zone 1, 216°C in zone 2 and 227°C in zone 3 and the die temperature was set at 210 °C. Samples were evaluated for fluid resistance and conformability as described in "Hydrocarbon Fluid Resistance" (Method A), "Hydraulic Fluid Resistance" (Method A), and "Conformability" (Method A) above. The results are shown in Table 1.

### Example 2

A clear fluoropolymer film was prepared by extruding DYNEON THV 400 to a thickness of 88.9 µm +/- 12 µm onto a 51 µm polyethylene terephthalate carrier web using a Haake extruder having a screw diameter of 1.9 cm and a die width of 20.3 cm, and employing a screw speed of 165 rpm and a web speed of 1.5 meters/minute. The extruder die was held approximately 1.9 cm away from the carrier. The extruder had three zones which were set at 193°C in zone 1, 216°C in zone 2 and 232°C in zone 3 and the die temperature was set at 243°C. Samples were evaluated for fluid resistance and conformability as described in Example 1. The results are reported in Table 1.

### Example 3

A clear fluoropolymer film was prepared by extruding DYNEON THV 200 to a thickness of 88.9 µm +/- 12 µm onto a 51 µm polyethylene terephthalate carrier web using a Haake extruder having a screw diameter of 1.9 cm and a die width of 20.3 cm, and employing a screw speed of 165 rpm and a web speed of 1.5 meters/minute. The extruder die was held approximately 1.9 cm away from the carrier. The extruder had three zones which were set at 204°C in zone 1, 237°C in zone 2 and 249°C in zone 3 and the die temperature was set at 249°C. Samples were evaluated for fluid resistance and conformability as described in Example 1. The results are reported in Table 1.

### Example 4

A sample of 50.8 µm thick TEDLAR TAW15AH8 film was evaluated for fluid resistance and conformability as described in Example 1. The results are reported in Table 1.

### Example 5

A 127 µm thick film of TEFZEL LZ300 was evaluated for fluid resistance and conformability as described in Example 1. The results are reported in Table 1.

### Example 6

A clear fluoropolymer film was prepared by extruding SOLEF 11010 to a thickness of 88.9 µm +/- 12 µm onto a 51 µm polyethylene terephthalate carrier web using a Haake extruder having a screw diameter of 1.9 cm and a die width of 20.3 cm, and employing a screw speed of 165 rpm and a web speed of 1.5 meters/minute. The extruder die was held approximately 1.9 cm away from the carrier. The extruder had three zones which were set at 183°C in zone 1, 210°C in zone 2 and 224°C in zone 3 and the die temperature was set at 232°C. Samples were evaluated for fluid resistance and conformability as described in Example 1. The results are reported in Table 1.

### Comparative Example 1

A clear fluoropolymer film was prepared by extruding SOLEF 1008 to a thickness of 88.9 µm +/- 12 µm onto a 51 µm polyethylene terephthalate carrier web using a Haake extruder having a screw diameter of 1.9 cm and a die width of 20.3 cm, and employing a screw speed of 165 rpm and a web speed of 1.5 meters/minute. The extruder die was held approximately 1.9 cm away from the carrier. The extruder had three zones which were set at 160°C in zone 1, 202°C in zone 2 and 224°C in zone 3 and the die temperature was set at 224°C. Samples were evaluated for fluid resistance and conformability as described in Example 1. The results are reported in Table 1.

### Comparative Example 2

A film of fluoropolymer/acrylic blend was prepared by extruding a mixture of 90 parts SOLEF 1008 with 10 parts PERSPEX CP-41 to a thickness of 88.9 µm +/- 12 µm onto a 51 µm polyethylene terephthalate carrier web using a Haake extruder having a screw diameter of 1.9 cm and a die width of 20.3 cm, and employing a screw speed of 165 rpm and a web speed of 1.5 meters/minute. The extruder die was held approximately 1.9 cm away from the carrier. The extruder had three zones which were set at 160°C in zone 1, 202 °C in zone 2 and 224°C in zone 3 and the die temperature was set at 224°C. Samples were evaluated for fluid resistance and conformability as described in Example 1. The results are reported in Table 1.

**TABLE 1**

| **Example** | **Backing** | **Hydrocarbon Fluid** | **Hydraulic Fluid** | **Conformability** |
|---|---|---|---|---|
| 1 | THV 500 | Pass | Pass | Pass |
| 2 | THV 400 | Pass | Pass | Pass |
| 3 | THV 200 | Pass | Pass | Pass |
| 4 | TEDLAR TAW15AH8 | Pass | Pass | Pass |
| 5 | TEFZEL LZ300 | Pass | Pass | Pass |
| 6 | SOLEF 11010 | Pass | Pass | Pass |
| CE 1 | SOLEF 1008 | Pass | Pass | Fail |
| CE 2 | SOLEF 1008 /PERSPEX CP-41 | Pass | Pass | Fail |

### Example 7

An applique according to the invention was provided in the following manner. A premix syrup was prepared by mixing together in a 4.0-liter glass jar 1550 grams of isooctyl acrylate (IOA), 172 grams of acrylic acid (AA), and 0.7 gram IRGACURE 651 photoinitiator. The jar was capped and a nitrogen source placed into the mixture through a hole in the cap. After purging with nitrogen for ten minutes the mixture was gently swirled and exposed to ultraviolet (UV) irradiation using two 15 Watt blacklight bulbs (Sylvania Model F15T8/350BL) until a syrup having a visually estimated viscosity of about 1000 centipoise was obtained. The nitrogen purge and irradiation were then discontinued and 3.1 grams of hexanediol diacrylate (HDDA), 3.0 grams of 2,4-bis(trichloromethyl)-6-(3,4-dimethoxy)phenyl)-s-triazine (3,4-DMT) and 3.4 grams of IRGACURE 651 were added to the premix syrup and dissolved therein by placing the combination, in a sealed jar, on a roller for 30 minutes to give the final syrup.

A clear fluoropolymer backing was prepared by extruding DYNEON THV 500 to a thickness of 88.9 µm +/- 12 µm onto a 51 µm polyester carrier web using a Haake extruder having a screw diameter of 1.9 cm and a die width of 20.3 cm, and employing a screw speed of 165 rpm and a web speed of 1.5 meters/minute. The extruder die was held approximately 1.9 cm away from the carrier. The extruder had three zones which were set at 204 °C in zone 1, 216 °C in zone 2 and 227 °C in zone 3; the die temperature was set at 220 °C. Next, the top surface of the backing was treated by Acton Technologies, Inc. (Pittston, PA) using their FLUOROETCH process.

The final syrup was coated onto the etched surface of the fluoropolymer backing using a knife-over-bed coating station. The knife was locked in position to maintain a fixed gap of 50.8 µm greater than the combined thickness of the fluoropolymer backing and the carrier web employed. The final syrup on the resulting coated composite was then cured by passing the composite through a 9.1 meter long UV irradiation chamber having bulbs mounted in the top which had a spectral output from 300 nm to 400 nm, with a maximum at 351 nm. The temperature setpoint was 15.5°C and the bulbs were set at an intensity of 3.1 milliWatts/centimeter². The chamber was continuously purged with nitrogen. The web speed through the coating station and irradiation chamber was 4.6 meters/minute resulting in a total measured energy dosage of 368 milliJoules/centimeter² (National Institute of Standards and Technology (NIST) units). After irradiation from the adhesive side, the final combined thickness of the cured adhesive and backing was approximately 132 µm, indicating a cured adhesive thickness of about 43 µm. A 127 µm polyethylene release liner was then laminated onto the exposed side of the adhesive. Next, the polyester carrier web was removed and the second, opposing surface of the backing was treated by Acton Technologies, Inc. using their FLUOROETCH process. The applique obtained was as described above in "Hydrocarbon Fluid Resistance" (Method B), "Hydraulic Fluid Resistance" (Method B). "Conformability" (Method B) and "Peel Adhesion Strength" (Methods A and B). The results are shown in Table 2.

### Example 8

A pigmented applique according to the invention was provided in the following manner. A final syrup was prepared as described in Example 7. A gray fluoropolymer backing was prepared by extruding a uniform mixture of 97% (w/w) clear DYNEON THV 500 charged with 3% (w/w) of a blend of gray pigment in DYNEON THV 200 (this pigmented material was prepared by Americhem, Incorporated, Elgin, IL such that the color of the resultant gray backing met the specifications for Federal Standard 595B, Color #36320). The mixture was extruded to a thickness of 88.9 µm +/- 12 µm onto a 51 µm polyester carrier web as described in Example 7 with the following modifications. The web speed was 1.8 meters/minute, Zone 1 was set at 224°C, Zone 2 was set at 243°C, Zone 3 was set at 246°C, and the die temperature was set at 243°C. The backing obtained was then surface treated on one side, coated with the final syrup, irrradiated, the cured adhesive covered with a polyethylene release liner, and the backing treated on its second, opposing surface all as described in Example 7. The applique obtained was evaluated as described in Example 7. The results are shown in Table 2.

### Example 9

An applique according to the invention was provided in the following manner. A premix syrup was prepared as described in Example 7 with the following modifications. 1200 grams of IOA, 211 grams of AA, and 0.5 gram of IRGACURE 651 photoinitiator were employed. Upon obtaining the premix syrup, the nitrogen purge and irradiation were discontinued and 2.5 grams 3,4-DMT, and 2.8 grams of IRGACURE 651 photoinitiator were added and dissolved in the premix syrup by placing the combination, in a sealed jar, on a roller for 30 minutes to give the final syrup. This was used to prepare and evaluate an applique as described in Example 7. The results are shown in Table 2.

### Example 10

Example 9 was repeated with the following modification. The fluoropolymer backing employed was that described in Example 8. The applique obtained was evaluated as described in Example 7. The results are shown in Table 2.

### Example 11

An applique according to the invention was provided by first preparing a solution polymer and then coating and drying it on a fluoropolymer backing. More specifically, to a one liter narrow-mouthed bottle were added 70 parts by weight IOA, 56 parts by weight ethyl acrylate, 14 parts by weight AA, 260 grams ethyl acetate and 0.42 grams benzoyl peroxide thermal initiator. The monomer solution was purged with nitrogen at a rate of 1 liter/minute for two minutes. The bottle was sealed and placed in a rotating water bath at 59°C for 24 hours. The resulting polymer solution was diluted with heptane to give a 21% solids solution. Next, 2.1 parts of a 5% (w/w) solution of N,N'-bis-1,2-propyleneisophthalamide in toluene was added, and the final polymer solution was then poured onto a fluoropolymer backing (described previously in Example 7), and coated using a knife-over-bed coating station. The gap between knife and bed was set to be 203 µm greater than the combined thickness of the fluoropolymer backing and the carrier web employed. The coated backing was dried in a 12-meter convection oven. The oven contained three zones with the first zone was set at 41°C, the second zone set at 60°C, and the third zone set at 82°C. The coated backing passed through the both the coating station and drying oven at 1.52 meters/minute. After drying, the combined thickness of the backing and cured adhesive was approximately 132 µm, indicating an adhesive thickness of about 43 µm. Next, a 127 µm polyethylene release liner was laminated onto the exposed side of the adhesive and the resultant applique was wound up. Finally, after unwinding, the the second opposing surface of the backing was treated as described in Example 7. The applique obtained was evaluated as described in Example 7. The results are shown in Table 2.

### Example 12

Example 11 was repeated but with the following modification. The backing employed was the same as that described in Example 10. The applique obtained was evaluated as described in Example 7. The results are shown in Table 2.

### Example 13

Example 12 was repeated with the following modifications. The adhesive solution was prepared by charging 94 parts by weight IOA, 6 parts by weight AA, and 0.35% by weight VAZO 64 thermal initiator, and a mixture of ethyl acetate/heptane (60:40/w:w) into a bottle to give a 39% solids composition. The coating gap between knife and bed was set to be 115 µm greater than the combined thickness of the fluoropolymer backing and the carrier web employed. The applique obtained was evaluated as described in Example 7. The results are shown in Table 2.

**TABLE 2**

| **Example** | **Pigment** | **Peel Adhesion N/100 mm** | | **Hydrocarbon Fluid** | **Hydraulic Fluid** | **Conformability** |
|---|---|---|---|---|---|---|
| | | **-51°C** | **24°C** | | | |
| 7. | none | b | 168 | Pass | Pass | Pass |
| 8 | 3% gray | b | 180 | Pass | Pass | Pass |
| 9 | none | b | 140 | Pass | Pass | Pass |
| 10 | 3% gray | b | 222 | Pass | Pass | Pass |
| 11 | none | b | 173 | Pass | Pass | Pass |
| 12 | 3% gray | b | 182 | Pass | Pass | Pass |
| 13 | 3% gray | b | 145 | Pass | Pass | Pass |

| | | | | | | |
|---|---|---|---|---|---|---|
| Note: All of the test strips for the examples listed above were reinforced along their entire length. | | | | | | |

### Examples 14-22 and Comparative Examples 3 and 4

A series of tapes were prepared in which the level of crosslinker in a solution polymerized adhesive ranged from 0 to 0.38% by weight. A solution polymer was prepared in the same manner as described for Example 11, except, prior to coating, varying levels of N,N'-bis-1,2-propyleneisophthalamide crosslinker were added to the solution polymer. The mixture was agitated until complete dissolution of the crosslinker was achieved. The resultant mixture was then coated on a pigmented fluoropolymer backing (previously described in Example 8), and dried according to Example 11. The overall level of crosslinker reported in Table 3 is given as a percent of the final dried adhesive composition. The appliques obtained were evaluated as described in Example 9. The results are shown in Table 3.

**TABLE 3**

| **Example** | **% x-1** | **Peel Adhesion Strength (N/100mm)** | | | | **Conformability** |
|---|---|---|---|---|---|---|
| | | **-51°C** | **24°C** | **Hydraulic Fluid** | **Hydrocarbon Fluid** | |
| 14 | -0- | b | 96 | 35 | 98 | Pass |
| CE 3 | 0.04 | b | 107 | 7 | 96 | Pass |
| 15 | 0.05 | b | 119 | 25 | 109 | Pass |
| 16 | 0.08 | b | 119 | 35 | 109 | Pass |
| 17 | 0.12 | b | 128 | 58 | 98 | Pass |
| 18 | 0.15 | b | 128 | 62 | 107 | Pass |
| 19 | 0.19 | b | 123 | 68 | 124 | Pass |
| 20 | 0.23 | b | 133 | 68 | 117 | Pass |
| 21 | 0.25 | b | 107 | 65 | 105 | Pass |
| 22 | 0.28 | b | 117 | 54 | 107 | Pass |
| CE 4 | 0.38 | b | 77 | 11 | 79 | Pass |

| | | | | | | |
|---|---|---|---|---|---|---|
| Note: x-1 = crosslinker | | | | | | |

### Comparative Example 5

A 0.47-liter glass jar was charged with 39.75 grams of IOA, 4.42 grams of AA, and 0.02 gram of IRGACURE 651 photoinitiator. This was processed as described in Example 7 to give a pre-mix syrup. Next, 0.094 gram of HDDA and 0.086 gram of IRGACURE 651 photoinitiator were added to the premix syrup and dissolved therein by placing the combination; in a sealed jar, on a roller for 30 minutes to give a final syrup. The final syrup was coated onto the etched surface of a gray pigmented fluoropolymer backing (prepared as described in Example 10), irradiated, the cured adhesive covered with polyethylene release liner, and the second opposing surface of the backing etched, all as described in Example 7 with the following modifications. The web speed was 2.4 meters/minute and the total measured dosage was 681 mJoules/cm² (NIST units). The final combined thickness of the cured adhesive and backing was approximately 132 µm, indicating an adhesive thickness of about 43 µm. The applique obtained was evaluated as described in Example 9. The results are shown in Table 4.

### Example 23

A premix syrup was prepared as described in Comparative Example 5 except 41.8 grams of IOA, 4.6 grams of AA, and 0.02 gram of IRGACURE 651 photoinitiator were used. Next, 0.085 gram of 2,4-bis(trichloromethyl)-6-(4-methoxy)phenyl-s-triazine (4-MT) and 0.091 gram of IRGACURE 651 photoinitiator were added to the premix syrup and dissolved therein by placing the combination, in a sealed jar, on a roller for 30 minutes to give a final syrup. This final syrup was used to prepare and evaluate an applique as described in Comparative Example 5. The results are shown in Table 4.

### Example 24

Comparative Example 5 was repeated with the following modifications. The premix syrup was prepared using 40.7 grams of IOA, 4.5 grams of AA, and 0.02 gram of IRGACURE 651 photoinitiator. Next, 0.052 gram of HDDA, 0.045 gram of 4-MT and 0.05 gram of IRGACURE 651 photoinitiator were added to the premix syrup and dissolved therein by placing the combination, in a sealed jar, on a roller for 30 minutes to give a final syrup. This final syrup was use to prepare and evaluate an applique as described in Comparative Example 5. The results are shown in Table 4.

### Example 25

Comparative Example 5 was repeated with the following modification. The premix syrup was prepared by mixing together in a 1 liter glass jar 611.2 grams of IOA, 67.9 grams of AA, and 0.27 gram of IRGACURE 651 photoinitiator. Next, 1.2 grams of HDDA, 1.36 grams of 3,4-DMT, and 1.3 grams of IRGACURE 651 photoinitiator was added to the premix syrup and dissolved therein by placing the combination, in a sealed jar, on a roller for 30 minutes to give a final syrup. This final syrup was use to prepare and evaluate an applique as described in Comparative Example 5. The results are shown in Table 4.

### Example 26

Comparative Example 5 was repeated with the following modifications. The premix syrup was prepared using 39.4 grams of IOA, 4.4 grams of AA, and 0.02 gram of IRGACURE 651 photoinitiator. Next, 0.06 gram of HDDA, 0.130 gram 4-MT, and 0.089 gram of IRGACURE 651 photoinitiator were added to the premix syrup and dissolved therein by placing the combination, in a sealed jar, on a roller for 30 minutes to give a final syrup. This final syrup was use to prepare and evaluate an applique as described in Comparative Example 5. The results are shown in Table 4.

### Example 27

Comparative Example 5 was repeated except that the premix syrup was prepared using 102.3 grams of IOA, 13.9 grams of AA, and 0.044 gram of IRGACURE 651 photoinitiator. Next, 0.21 grams of HDDA, 0.936 grams of a 75:25/w:w solution of IOA/acryloxy benzophenone (ABP) and 0.232 grams of IRGACURE 651 photoinitiator were added to the premix syrup and dissolved therein by placing the combination, in a sealed jar, on a roller for 30 minutes to give a final syrup. This final syrup was used to prepare and evaluate an applique as described in Comparative Example 5. The results are shown in Table 4.

**TABLE 4**

| **Ex.** | **% HDDA x-1** | **% Other x-1** | **Peel Adhesion (N/100mm)** | | | | **Conformability** |
|---|---|---|---|---|---|---|---|
| | | | **-51°C** | **24°C** | **Hydraulic Fluid** | **Hydrocarbon Fluid** | |
| CE 5 | 0.18 | None | 26 | 84 | 0 | 7 | Pass |
| 23 | None | 0.18 4-MT | 40 | 79 | 49 | 39 | Pass |
| 24 | 0.11 | 0.1 4-MT | 44 | 77 | 67 | 47 | Pass |
| 25 | 0.18 | 0.18 3,4-DMT | 54 | 110 | 68 | 65 | Pass |
| 26 | 0.14 | 0.3 4-MT | 39 | 77 | 54 | 44 | Pass |
| 27 | 0.18 | 0.2 ABP | 42 | 112 | 68 | 88 | Pass |

| | | | | | | | |
|---|---|---|---|---|---|---|---|
| Note: x-1 = crosslinker | | | | | | | |

### Comparative Example 6

An applique was prepared as described in Example 11 with the following modification. The fluoropolymer backing was not etched on the surface which was coated with the final syrup. After laminating the polyethylene release liner to the exposed side of the cured adhesive the second, opposing surface of the backing was treated as described in Example 7. The applique obtained was evaluated as described in Example 7. The results are shown in Table 5.

### Example 28

A premix syrup was prepared as described in Example 10. Next, 2.5 grams 3,4-DMT, and 2.8 grams of IRGACURE 651 photoinitiator were added to the premix syrup and dissolved therein by placing the combination, in a sealed jar, on a roller for 30 minutes to give a final syrup. The final syrup was used to prepare and evaluate an applique as described in Example 7. The results are shown in Table 5.

### Example 29

A premix syrup was prepared as described in Example 8. Next, 2.5 grams 3,4-DMT, and 2.8 grams of IRGACURE 651 photoinitiator was added to the premix syrup and dissolved therein by placing the combination, in a sealed jar, on a roller for 30 minutes to give a final syrup. A fluoropolymer backing was prepared as described in Example 9, with the following modifications. The surface of the backing to be coated with adhesive was treated with a corona discharge of 17 J/cm² at a rate of 0.6 meter/minute at a width of 35.6 cm using a gas mixture of 1% hydrogen in nitrogen on a bare roll treater with rotating type electrodes covered with silicone dielectric. The final syrup was coated onto the corona treated side of the fluoropolymer backing and then irradiated as described in Example 9. The carrier web was then removed and the second, opposing surface of the backing was treated by Acton Technologies, Inc. using their FLUOROETCH process. The applique obtained was evaluated as described in Example 7. The results are shown in Table 5.

### Example 30

Example 29 was repeated with the following modification. Both surfaces of the fluoropolymer backing were corona treated as described in Example 29. The applique obtained was evaluated as described in Example 7. The results are shown in Table 5.

### Example 31

Example 28 was repeated with the following modification. The pigmented fluoropolymer backing described in Example 10 was employed. The applique obtained was evaluated as described in Example 7. The results are shown in Table 5.

### Example 32

Example 29 was repeated with the following modification. The pigmented fluoropolymer backing described in Example 10 was employed. The applique obtained was evaluated as described in Example 7. The results are shown in Table 5.

**TABLE 5**

| **Ex.** | **Adhesive Side Etchant** | **Peel Adhesion (N/100mm)** | | | | **Conformability** |
|---|---|---|---|---|---|---|
| | | **-51°C** | **24°C** | **Hydraulic Fluid** | **Hydrocarbon Fluid** | |
| CE 6 | none | 4 | 7 | Fail | Fail | Pass |
| 28 | FluoroEtch | 41 | 184 | Pass | Pass | Pass |
| 29 | Corona | 319 | 187 | Pass | Pass | Pass |
| 30 | Corona | 215 | 182 | Pass | Pass | Pass |
| 31 | FluoroEtch | 59 | 179 | Pass | Pass | Pass |
| 32 | Corona | 369 | 201 | Pass | Pass | Pass |

| | | | | | | |
|---|---|---|---|---|---|---|
| Note: All of the test strips for the examples listed above were reinforced along their entire length. | | | | | | |

### Example 33-35

A sample of the applique of Example 25, measuring 7.62 cm x 11.43 was applied to a same sized aluminum coupon (described in "Applique Test Coupon Preparation"). The applique completely covered the aluminum surface. Next, peel adhesion strength was measured after dwell times of 1, 24, and 48 hours at room temperature as described in Example 9 with the following modification. The test strips were applied to the applique covered surface of the aluminum coupon. Three such coupons were prepared, one for each dwell time employed. The results are shown in Table 6 below.

**TABLE 6**

| **Example** | **Dwell (hours)** | **Peel Adhesion Strength ((@24°C) (N/100mm)** |
|---|---|---|
| 33 | 1 | 52 |
| 34 | 24 | 56 |
| 35 | 48 | 51 |

### Example 36

A pigmented fluoropolymer backing was prepared as described in Example 8 with the following modification. The uniform pigmented fluoropolymer mixture was extruded at a thickness of 203 µm +/- 20 µm. The top surface of the backing was then treated, coated with the final syrup, irradiated, and the exposed side of the adhesive covered with a polyethylene release liner all as described in Example 7. Next, after removal of the carrier web, a sample of the applique measuring 61.0 cm x 61.0 cm was placed into a thermo former equipped with a vacuum (available from Heartland). The surface of the applique having the release liner on it was placed down on the carriage of the thermoformer and heated to between 120 °C and 135 °C (as determined by using an infrared sensor) using infrared heaters. Upon reaching this temperature range, the carriage was moved away from the heater and over a rounded cone mold having a height of 30.5 cm and a diameter of 45.7 cm. The mold was raised up into the heated applique such that the applique was conformed around the mold. Immediately thereafter, a vacuum was applied to ensure uniform intimate contact between the applique and mold. After approximately two minutes the applique had cooled to about 24°C whereupon the vacuum was released and a three dimensional applique having a pressure sensitive adhesive, covered with a release Iliner, on its inner surface was obtained.

### Comparative Examples 7-14

Several tape products available from 3M Company were evaluated for use as appliques as described in Example 7. The results are shown in Table 7.

**TABLE 7**

| **Ex.** | **Tape Product #** | **Backing / Adhesive** | **Peel Adhesion (N/100mm)** | | **Hydrocarbon Fluid** | **Hydraulic Fluid** |
|---|---|---|---|---|---|---|
| | | | **-51°C** | **24°C** | | |
| CE 7 | 855 | Nylon / Rubber | 5 | 49 | Fail | Fail |
| CE 8 | 2185 | PP / Rubber | 86 | 89 | Fail | Pass |
| CE 9 | 63 | PTFE / Acrylic | 2 | 42 | Pass | Pass |
| CE 10 | 5498 | PTFE / Rubber | 12 | 40 | Fail | Pass |
| CE 11 | 5490 | PTFE / Silicone | 131 | 52 | Fail | Pass |
| CE 12 | 838 | TEDLAR / Acrylic | 12 | 72 | Fail | Fail |
| CE 13 | 9325 | UHMW PE /acrylic | 5 | 100 | Fail | Pass |
| CE 14 | 5690 | PET / Acrylic | - | 65 | Pass | Fail |

## Claims

1. An airplane comprising an outer surface and an applique thereon, wherein the applique comprises:
a backing having at least one treated surface which has been treated by corona treatment or chemical etch and comprising a fluorinated polymer; and
a substantially fully cured pressure sensitive adhesive layer on the treated surface comprising an acrylate copolymer comprising copolymerized monomers comprising at least one monofunctional alkyl (meth)acrylate monomer and at least one monofunctional free-radically copolymerizable acid-containing reinforcing monomer having a homopolymer glass transition temperature higher than that of the alkyl (meth)acrylate monomer.

2. An applique comprising:
a backing having at least one treated surface which has been treated by corona treatment or chemical etch and comprising a fluorinated polymer; and
a substantially fully cured pressure sensitive adhesive layer on the treated surface comprising an acrylate copolymer comprising copolymerized monomers comprising at least one monofunctional alkyl (meth)acrylate monomer and at least one monofunctional free-radically copolymerizable acid-containing reinforcing monomer having a homopolymer glass transition temperature higher than that of the alkyl (meth)acrylate monomer, wherein:
the applique has a peel strength of at least 25 N/100 mm at room temperature after being applied to an aluminum substrate and immersed in a phosphate ester hydraulic fluid for 30 days at room temperature; and
the applique has a peel strength of at least 30 N/100 mm at -51°C.

3. The applique of claim 2 which is conformable wherein "conformable" means that the applique can be applied to various contoured and/or complex surfaces and maintains intimate contact with the entire surface for the time required for the desired application.

4. The applique of claim 3 which has a peel strength of at least 30 N/100 mm at room temperature after being applied to an aluminum substrate and immersed in a hydrocarbon fluid for 14 days at room temperature.

5. An applique comprising:
a backing having at least one treated surface which has been treated by corona treatment or chemical etch and comprising a fluorinated polymer that is not perfluorinated; and
a substantially fully cured pressure sensitive adhesive layer on the treated surface comprising a acrylate copolymer comprising copolymerized monomers comprising at least one monofunctional alkyl (meth)acrylate monomer and at least one monofunctional free-radically copolymerizable acid-containing reinforcing monomer having a homopolymer glass transition temperature higher than that of the alkyl (meth)acrylate monomer; wherein the applique:
is conformable wherein "conformable" means that the applique can be applied to various contoured and/or complex surfaces and maintains intimate contact with the entire surface for the time required for the desired application ;
has a peel strength of at least 30 N/100 mm at room temperature after being applied to an aluminum substrate and immersed in a hydrocarbon fluid for 14 days at room temperature;
has a peel strength of at least 25 N/100 mm at room temperature after being applied to an aluminum substrate and immersed in a phosphate ester hydraulic fluid for 30 days at room temperature; and
has a peel strength of at least 30 N/100 mm at -51°C.

6. The applique of claim 5 wherein the alkyl (meth)acrylate monomer when homopolymerized has a glass transition temperature of no greater than 0°C, and wherein the free-radically copolymerizable acid-containing reinforcing monomer when homopolymerized has a glass transition temperature of at least 10°.C.

7. The applique of claim 6 wherein the free-radically copolymerizable acid-containing reinforcing monomer is a monofunctional (meth)acrylic monomer.

8. The applique of claim 5 wherein the acrylate copolymer further comprises at least one nonionic crosslinking agent.

9. The applique of claim 5 wherein the backing further includes a colorant.

10. The applique of claim 5 wherein the backing is conformable wherein "conformable" means that the backing can be applied to various contoured and/or complex surfaces and maintains intimate contact with the entire surface for the time required for the desired application.

11. The applique of claim 5 wherein the backing does not demonstrate a change in weight by more than 10% after being immersed in a hydrocarbon fluid for 14 days at room temperature.

12. The applique of claim 5 wherein the backing does not demonstrate a change in weight by more than 10% after being immersed in a phosphate ester hydraulic fluid for 30 days at room temperature.

13. The applique of claim 5 wherein the backing comprises a blend of two or more polymers.

## Patentansprüche

1. Flugzeug, das eine Außenfläche und eine Applikation darauf umfasst, wobei die Applikation Folgendes umfasst:
einen Träger, der mindestens eine behandelte Fläche aufweist, die durch Coronabehandlung oder chemische Ätzung behandelt worden ist, und ein fluoriertes Polymer umfasst; und
eine im Wesentlichen vollständig ausgehärtete druckempfindliche Haftmittelschicht auf der behandelten Fläche, die ein Acrylat-Copolymer umfasst, das copolymerisierte Monomere umfasst, die mindestens ein monofunktionales Alkyl(meth)acrylat-Monomer und mindestens ein monofunktionales radikalcopolymerisierbares säurehaltiges verstärkendes Monomer umfassen, das eine Homopolymer-Glasübergangstemperatur aufweist, die höher als jene des Alkyl(meth)acrylat-Monomers ist.

2. Applikation, die Folgendes umfasst:
einen Träger, der mindestens eine behandelte Fläche aufweist, die durch Coronabehandlung oder chemische Ätzung behandelt worden ist, und ein fluoriertes Polymer umfasst; und
eine im Wesentlichen vollständig ausgehärtete druckempfindliche Haftmittelschicht auf der behandelten Fläche, die ein Acrylat-Copolymer umfasst, das copolymerisierte Monomere umfasst, die mindestens ein monofunktionales Alkyl(meth)acrylat-Monomer und mindestens ein monofunktionales radikalcopolymerisierbares säurehaltiges verstärkendes Monomer umfassen, das eine Homopolymer-Glasübergangstemperatur aufweist, die höher als jene des Alkyl(meth)acrylat-Monomers ist; wobei:
die Applikation bei Zimmertemperatur eine Abschälkraft von mindestens 25 N/100 mm aufweist, nachdem sie auf ein Aluminiumsubstrat aufgebracht und 30 Tage lang bei Zimmertemperatur in eine Phosphatester-Hydraulikflüssigkeit getaucht worden ist; und
die Applikation bei -51°C eine Abschälkraft von mindestens 30 N/100 mm aufweist.

3. Applikation nach Anspruch 2, die anpassungsfähig ist, wobei "anpassungsfähig" bedeutet, dass die Applikation auf verschiedene konturierte und/oder komplexe Flächen aufgebracht werden kann und über die Zeit, die für die gewünschte Anwendung erforderlich ist, engen Kontakt zur gesamten Fläche beibehält.

4. Applikation nach Anspruch 3, die bei Zimmertemperatur eine Abschälkraft von mindestens 30 N/100 mm aufweist, nachdem sie auf ein Aluminiumsubstrat aufgebracht und 14 Tage lang bei Zimmertemperatur in eine Kohlenwasserstoff-Flüssigkeit getaucht worden ist.

5. Applikation, die Folgendes umfasst:
einen Träger, der mindestens eine behandelte Fläche aufweist, die durch Coronabehandlung oder chemische Ätzung behandelt worden ist, und ein fluoriertes Polymer umfasst, das nicht perfluoriert ist; und
eine im Wesentlichen vollständig ausgehärtete druckempfindliche Haftmittelschicht auf der behandelten Fläche, die ein Acrylat-Copolymer umfasst, das copolymerisierte Monomere umfasst, die mindestens ein monofunktionales Alkyl(meth)acrylat-Monomer und mindestens ein monofunktionales radikalcopolymerisierbares säurehaltiges verstärkendes Monomer umfassen, das eine Homopolymer-Glasübergangstemperatur aufweist, die höher als jene des Alkyl(meth)acrylat-Monomers ist; wobei die Applikation:
anpassungsfähig ist, wobei "anpassungsfähig" bedeutet, dass die Applikation auf verschiedene konturierte und/oder komplexe Flächen aufgebracht werden kann und über die Zeit, die für die gewünschte Anwendung erforderlich ist, engen Kontakt zur gesamten Fläche beibehält;
bei Zimmertemperatur eine Abschälkraft von mindestens 30 N/100 mm aufweist, nachdem sie auf ein Aluminiumsubstrat aufgebracht und 14 Tage lang bei Zimmertemperatur in eine Kohlenwasserstoff-Flüssigkeit getaucht worden ist;
bei Zimmertemperatur eine Abschälkraft von mindestens 25 N/100 mm aufweist, nachdem sie auf ein Aluminiumsubstrat aufgebracht und 30 Tage lang bei Zimmertemperatur in eine Phosphatester-Hydraulikflüssigkeit getaucht worden ist; und
bei -51°C eine Abschälkraft von mindestens 30 N/100 mm aufweist.

6. Applikation nach Anspruch 5, wobei das Alkyl(meth)acrylat-Monomer, wenn es homopolymerisiert ist, eine Glasübergangstemperatur von nicht größer als 0°C aufweist und wobei das radikalcopolymerisierbare säurehaltige verstärkende Monomer, wenn es homopolymerisiert ist, eine Glasübergangstemperatur von mindestens 10°C aufweist.

7. Applikation nach Anspruch 6, wobei das radikalcopolymerisierbare säurehaltige verstärkende Monomer ein monofunktionales (Meth)acrylMonomer ist.

8. Applikation nach Anspruch 5, wobei das Acrylat-Copolymer ferner mindestens ein nichtionisches Vernetzungsmittel umfasst.

9. Applikation nach Anspruch 5, wobei der Träger ferner ein Farbmittel enthält.

10. Applikation nach Anspruch 5, wobei der Träger anpassungsfähig ist, wobei "anpassungsfähig" bedeutet, dass der Träger auf verschiedene konturierte und/oder komplexe Flächen aufgebracht werden kann und über die Zeit, die für die gewünschte Anwendung erforderlich ist, engen Kontakt zur gesamten Fläche beibehält.

11. Applikation nach Anspruch 5, wobei der Träger keine Gewichtsänderung um mehr als 10% zeigt, nachdem er 14 Tage lang bei Zimmertemperatur in eine Kohlenwasserstoff-Flüssigkeit getaucht worden ist.

12. Applikation nach Anspruch 5, wobei der Träger keine Gewichtsänderung um mehr als 10% zeigt, nachdem er 30 Tage lang bei Zimmertemperatur in eine Phosphatester-Hydraulikflüssigkeit getaucht worden ist.

13. Applikation nach Anspruch 5, wobei der Träger ein Gemisch aus zwei oder mehr Polymeren umfasst.

## Revendications

1. Avion comprenant une surface extérieure et un élément d'application sur celle-ci, l'élément d'application comprenant :
un support comportant au moins une surface traitée qui a été traitée par décharge corona ou gravure chimique et comprenant un polymère fluoré ; et
une couche d'adhésif sensible à la pression presque entièrement durcie sur la surface traitée comprenant un copolymère acrylate comprenant des monomères copolymérisés comprenant au moins un monomère (méth)acrylate d'alkyle monofonctionnel et au moins un monomère de renforcement monofonctionnel contenant un acide copolymérisable par polymérisation radicalaire ayant une température de transition vitreuse d'homopolymère supérieure à celle du monomère (méth)acrylate d'alkyle.

2. Élément d'application comprenant :
un support comportant au moins une surface traitée qui a été traitée par décharge corona ou gravure chimique et comprenant un polymère fluoré ; et
une couche d'adhésif sensible à la pression presque entièrement durcie sur la surface traitée comprenant un copolymère acrylate comprenant des monomères copolymérisés comprenant au moins un monomère (méth)acrylate d'alkyle monofonctionnel et au moins un monomère de renforcement monofonctionnel contenant un acide copolymérisable par polymérisation radicalaire ayant une température de transition vitreuse d'homopolymère supérieure à celle du monomère (méth)acrylate d'alkyle ; dans lequel :
l'élément d'application a une résistance au décollement d'au moins 25 N/100 mm à la température ambiante après avoir été appliqué sur un substrat en aluminium et immergé dans un fluide hydraulique à base d'ester de phosphate pendant 30 jours à la température ambiante ; et
l'élément d'application a une résistance au décollement d'au moins 30 N/100 mm à -51 °C.

3. Élément d'application selon la revendication 2, lequel est conformable, le terme « conformable » signifiant que l'élément d'application peut être appliqué sur diverses surfaces profilées et/ou complexes et maintient un contact intime avec toute la surface pendant le temps requis pour l'application désirée.

4. Élément d'application selon la revendication 3, lequel a une résistance au décollement d'au moins 30 N/100 mm à la température ambiante après avoir été appliqué sur un substrat en aluminium et immergé dans un fluide hydrocarbure pendant 14 jours à la température ambiante.

5. Élément d'application comprenant :
un support comportant au moins une surface traitée qui a été traitée par décharge corona ou gravure chimique et comprenant un polymère fluoré qui n'est pas perfluoré ; et
une couche d'adhésif sensible à la pression presque entièrement durcie sur la surface traitée comprenant un copolymère acrylate comprenant des monomères copolymérisés comprenant au moins un monomère (méth)acrylate d'alkyle monofonctionnel et au moins un monomère de renforcement monofonctionnel contenant un acide copolymérisable par polymérisation radicalaire ayant une température de transition vitreuse d'homopolymère supérieure à celle du monomère (méth)acrylate d'alkyle ; dans lequel l'élément d'application :
est conformable, le terme « conformable » signifiant que l'élément d'application peut être appliqué sur diverses surfaces profilées et/ou complexes et maintient un contact intime avec toute la surface pendant le temps requis pour l'application désirée ;
a une résistance au décollement d'au moins 30 N/100 mm à la température ambiante après avoir été appliqué sur un substrat en aluminium et immergé dans un fluide hydrocarbure pendant 14 jours à la température ambiante ;
a une résistance au décollement d'au moins 25 N/100 mm à la température ambiante après avoir été appliqué sur un substrat en aluminium et immergé dans un fluide hydraulique à base d'ester de phosphate pendant 30 jours à la température ambiante ; et
a une résistance au décollement d'au moins 30 N/100 mm à -51 °C.

6. Élément d'application selon la revendication 5, dans lequel le monomère (méth)acrylate d'alkyle, quand il est homopolymérisé, a une température de transition vitreuse ne dépassant pas 0 °C, et dans lequel le monomère de renforcement contenant un acide copolymérisable par polymérisation radicalaire, quand il est homopolymérisé, a une température de transition vitreuse d'au moins 10 °C.

7. Élément d'application selon la revendication 6, dans lequel le monomère de renforcement contenant un acide copolymérisable par polymérisation radicalaire est un monomère (méth)acrylique monofonctionnel.

8. Élément d'application selon la revendication 5, dans lequel le copolymère acrylate comprend en outre au moins un agent de réticulation non ionique.

9. Élément d'application selon la revendication 5, dans lequel le support contient en outre un colorant.

10. Élément d'application selon la revendication 5, dans lequel le support est conformable, le terme « conformable » signifiant que le support peut être appliqué sur diverses surfaces profilées et/ou complexes et maintient un contact intime avec toute la surface pendant le temps requis pour l'application désirée.

11. Élément d'application selon la revendication 5, dans lequel le support ne présente pas de changement de poids supérieur à 10 % après avoir été immergé dans un fluide hydrocarbure pendant 14 jours à la température ambiante.

12. Élément d'application selon la revendication 5, dans lequel le support ne présente pas de changement de poids supérieur à 10 % après avoir été immergé dans un fluide hydraulique à base d'ester de phosphate pendant 30 jours à la température ambiante.

13. Élément d'application selon la revendication 5, dans lequel le support comprend un mélange de deux polymères ou plus.
